# DEMANDE DE BREVET EUROPEEN

(11) **EP 2 637 094 A1**
(43) Date de publication de la demande: **11.09.2013**
(21) Numéro de dépôt: 13157615.9
(22) Date de dépôt: 04.03.2013
(51) Int. Cl.: G06F 9/45, G06F 9/52

(54) **Procédé d'optimisation d'un ensemble de bibliothèques logicielles partagées, notamment pour un système d'exploitation fermé stocké dans le micrologiciel d'un équipement**

(30) Priorité: 06.03.2012 FR 1252046
(71) Demandeur: Freebox, 75008 Paris (FR)
(72) Inventeur: Vasseur, Clément, 75008 Paris (FR)
(74) Mandataire: Dupuis-Latour, Dominique

(57) **Abrégé**

Ce procédé comprend : a) la compilation de fichiers source contenant N fonctions en fichiers objet intermédiaires segmentés isolant chaque fonction dans une section différente ; b) l'édition des liens des fichiers objet, donnant une première version de bibliothèque partagée (B.so) regroupant les N fonctions ; c) la création d'un fichier d'archive (B.a) regroupant les fichiers intermédiaires ; d) la compilation et l'édition des liens des programmes exécutables (P1, P2 ...) utilisant la bibliothèque partagée ; e) l'analyse (24) de ces programmes pour établir une liste de F fonctions susceptibles d'être appelées par au moins l'un de ces programmes ; et f) la création (26) d'une version réduite des bibliothèques partagées (B.so) à partir du fichier d'archive (B.a) et de la liste. Le procédé est réitéré (26 ... 34) jusqu'à incorporer également toutes les fonctions utilisées par des bibliothèques partagées.

## Description

L'invention concerne l'optimisation des bibliothèques logicielles partagées utilisées notamment par les systèmes d'exploitation fermés.

Les systèmes d'exploitation fermés (par opposition aux systèmes d'exploitation ouverts, tels ceux utilisés par un ordinateur standard) sont souvent implémentés sous forme d'un micrologiciel ou *firmware* au sein d'un équipement tel qu'un boitier de type *Set-top box* (c'est-à-dire un boitier décodeur transformant un signal externe tel que signal video, signal d'antenne satellite, etc. pour l'afficher sur l'écran d'un téléviseur) ou un boitier décodeur de fournisseur d'accès Internet (FAI), relié d'une part au serveur distant du FAI par une liaison réseau de type IP (ADSL ou fibre optique) et couplé d'autre part à divers équipements tels que routeur Ethernet ou Wi-Fi, téléphone, téléviseur via une *Set-top box* additionnelle, etc. Compte tenu des ressources restreintes d'un tel équipement, notamment en termes de capacité du *firmware,* il est souhaitable de réduire au strict minimum la taille et les fonctionnalités du système d'exploitation. D'autre part, du fait du caractère figé du *firmware* (qui ne peut être modifié qu'en rechargeant une version complète du code binaire exécutable), il est nécessaire d'inclure dans le système d'exploitation toutes les fonctionnalités susceptibles d'être utilisées par l'équipement.

À cet égard, les programmes inclus dans le *firmware* se partagent des ressources communes telles que des bibliothèques logicielles qui regroupent des ensembles de fonctions utilitaires mises à disposition des programmes exécutables du système. Les programmes pourront accéder en cours d'exécution à ces fonctions par appel à une interface de programmation applicative (API), qui est la partie visible de la bibliothèque listant les fonctions contenues dans celle-ci avec leurs identifiants et la liste des arguments à fournir et de ceux qui seront retournés après exécution de la fonction appelée. Le contenu de la bibliothèque peut donc être répertorié à partir de cette seule interface.

Un *firmware* typique de *Set-top box* ou de décodeur de FAI peut ainsi inclure une dizaine à une centaine de bibliothèques partagées, pour un millier à une dizaine de milliers de fonctions potentiellement utilisables.

On comprend ainsi l'importance qu'il y a dans un système fermé à optimiser la taille des bibliothèques, pour répondre aux contraintes de capacité de la mémoire flash stockant le *firmware* du système d'exploitation.

Le US 7 243 346 B1 divulgue, dans un système de type ouvert, une technique de gestion d'une bibliothèque dynamiquement modifiable en fonction des applications susceptibles d'y faire appel. Le système analyse les applications, établit une liste des éléments requis pour l'exécution de ces applications, et modifie en conséquence le contenu de la bibliothèque pour en éliminer les éléments inutiles, de manière à optimiser la taille globale de celle-ci. Si une application requiert un élément absent de la bibliothèque, cette dernière est régénérée, en conservant l'élément en question parmi ceux de la liste initiale. Cependant, en tout état de cause le contenu de la bibliothèque n'est pas constitué de modules directement exécutables, mais d'éléments associés par la suite à l'application, par exemple lors d'une phase ultérieure d'interprétation.

D'autres techniques de réduction de la taille d'applications ou de bibliothèques sont divulguées par les US 5 408 665 A, US 6 336 122 B1 et US 6 247 175 B1, ou encore par F Tip et al., "Practical Expérience with an Application Extractor for Java", OOPLSA Object-Orientated Programming Systems Languages and Applications Conference Proceedings, Vol. 34, No. 10, 01 Nov. 2009, pp.292-305

Le point de départ de l'invention est la constatation de ce que, dans un système fermé (et à la différence d'un système ouvert) on peut connaitre à l'avance toutes les fonctions d'une bibliothèque partagée qui sont susceptibles d'être utilisées, que ces fonctions soient utilisées par un programme exécutable ou par une autre bibliothèque partagée du même système (une bibliothèque pouvant utiliser des fonctions contenues dans une autre bibliothèque).

L'idée de base de l'invention consiste, après avoir compilé les différentes bibliothèques partagées du système, à les recréer sous une forme condensée d'où auront été éliminées les fonctions de cette bibliothèque qui n'ont vocation à être utilisées ni par un programme exécutable ni par aucune autre bibliothèque partagée du système d'exploitation.

Plus précisément, après avoir compilé l'ensemble du système (programmes exécutables et bibliothèques partagées), l'invention propose d'analyser les programmes exécutables et les bibliothèques pour y relever toutes les fonctions susceptibles d'être utilisées, puis de recréer chaque bibliothèque à partir d'un fichier d'archive intermédiaire, en éliminant les fonctions qui n'ont vocation à être utilisées ni par un programme ni par une autre bibliothèque.

On verra que cette manière de procéder implique, lors de la compilation et de l'édition des liens de la bibliothèque, non seulement la création du fichier objet de la bibliothèque partagée, mais également la création en parallèle d'un fichier d'archive intermédiaire de type segmenté, où chaque fonction est isolée dans une section différente de manière à pouvoir accéder individuellement au code de cette fonction.

On notera que la solution de l'invention n'est pas limitée aux bibliothèques partagées de "fonctions" considérées au sens strict de ce terme, c'est-à-dire des routines exécutables, mais s'applique également à tout type de ressource logicielle partageable, par exemple des données partagées ou "données globales". Le terme de "fonction" utilisé par la suite devra être ainsi entendu de façon générale pour désigner toutes ressources partagées, qu'il s'agisse de routines exécutables ou de données globales.

La présente invention vise, de façon générale, un procédé du type général divulgué par le US 7 243 346 B1, correspondant au préambule de la revendication 1 annexée, pour la construction d'une bibliothèque logicielle partagée, comprenant une pluralité de fonctions utilitaires ou données partagées et destinée à être utilisée par une pluralité prédéfinie de programmes exécutables.

La partie caractérisante de la revendication 1 annexée expose en détail les étapes successives du procédé de l'invention.

Les fichiers intermédiaires peuvent être éventuellement stockés dans le fichier d'archive sous forme de fichiers source, ultérieurement compilés en fichiers objet.

De façon plus générale ce procédé peut être appliqué, comme cela est exposé plus en détail dans la revendication 3 annexée, à l'optimisation globale d'une pluralité de bibliothèques logicielles partagées, où chaque bibliothèque partagée regroupe des fonctions susceptibles d'être appelées aussi bien par l'un des programmes exécutables que par une autre des bibliothèques partagées de l'ensemble de bibliothèques.

On va maintenant décrire un exemple de mise en oeuvre de l'invention, en référence aux dessins annexés où les mêmes références numériques désignent d'une figure à l'autre des éléments identiques ou fonctionnellement semblables.
La Figure 1 est une représentation schématique des différents fichiers impliqués lors des étapes de compilation/édition des liens d'un système d'exploitation d'un système fermé, selon l'état de la technique.
La Figure 2 illustre la première phase du procédé de l'invention, au cours de laquelle sont créés à partir de divers fichiers source à la fois une bibliothèque partagée et un fichier d'archive segmenté qui sera ensuite utilisé pour optimiser la taille de cette bibliothèque.
La Figure 3 illustre la deuxième phase du procédé de l'invention, avec les réductions de taille des diverses bibliothèques partagées du système, dans des versions reconstruites à partir de fichiers d'archive.

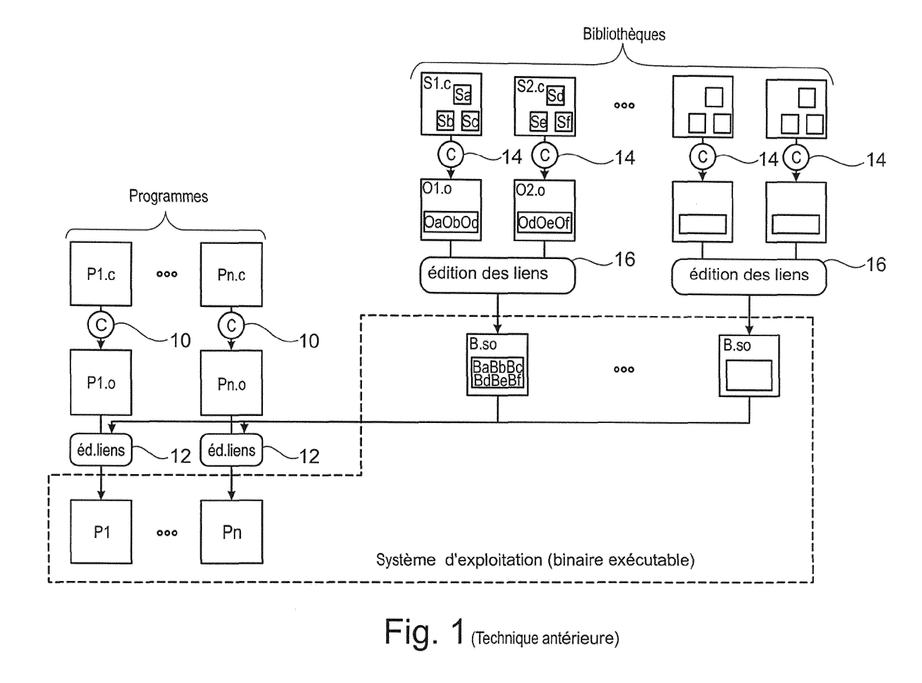

Sur la Figure 1 on a désigné P1.c ... Pn.c les fichiers source des différents programmes du système. Après compilation (étape 10), ces fichiers deviennent des fichiers objet de programme respectifs P1.o ... Pn.o donnant, après l'exécution de l'étape d'édition des liens (étape 12), des fichiers de programmes exécutables P1 ... Pn intégrés au système d'exploitation sous la forme mémorisée dans le *firmware.*

De la même façon, il est prévu une pluralité de bibliothèques partagées, avec des fichiers source S1.c, S2.c ... incorporant des fonctions utilitaires (ou données globales) Sa, Sb, Sc ... et Sd, Se, Sf, ...etc. Après compilation (étape 14), ces différents fichiers source donnent des fichiers objet intermédiaires O1.o, O2.o, etc., contenant le code binaire compilé respectif Oa, Ob, Oc et Od, Oe, Of, etc. des différentes fonctions. Après édition des liens (étape 16), les fichiers objet intermédiaires O1.o, O2.o ... sont assemblés pour donner une bibliothèque partagée B.so implémentant l'ensemble des fonctions Ba, Bb, Bc, Bd, Be, Bf, etc. comprises initialement dans les fichiers source S1.c, S2.c ...

Un certain nombre de bibliothèques partagées B.so sont ainsi obtenues, chacune regroupant un grand nombre de fonctions.

On notera que l'édition des liens des programmes (étape 12) implique de disposer des bibliothèques partagées B.so utilisées par ces programmes, et que ces bibliothèques devront donc être compilées avant les programmes.

L'ensemble constitué par les bibliothèques partagées B.so et les programmes exécutables P1 ... Pn constitue, globalement, le système d'exploitation dans sa forme exécutable mémorisée dans le *firmware* de l'équipement, et ceci de façon indivisible.

Ce système d'exploitation peut être par exemple de type Linux, UNIX ..., écrit dans un langage autorisant la construction de bibliothèques partagées tel que C, C++, Objective-C, etc. (à l'opposé, les langages exécutables par machines virtuelles tels que Java ou JavaScript ne mettent pas en oeuvre des bibliothèques partagées).

Le système d'exploitation inclut donc, outre les programmes exécutables, toutes les fonctions prévues à l'origine dans les fichiers source S1.c, S2.c ..., qui ont servi à constituer les différentes bibliothèques partagées B.so.

Or, un certain nombre de ces fonctions ne seront pas utilisées par les programmes particuliers P1 ... Pn incorporés au système d'exploitation, ni par aucune autre bibliothèque autre que celle en question. Ces fonctions inutilisées augmentent donc inutilement la taille des bibliothèques partagées. De la même façon, des fonctions identiques, et utilisées par au moins un programme, peuvent se retrouver dans plusieurs bibliothèques partagées différentes, avec la même conséquence sur la taille inutilement accrue du système d'exploitation.

Mais il n'est pas possible d'analyser et de modifier les bibliothèques déjà compilées (fichiers ".so"), compte tenu du caractère indivisible du fichier binaire ".so" résultant de la compilation. On ne peut donc pas éliminer individuellement telle ou telle fonction de ce fichier compilé.

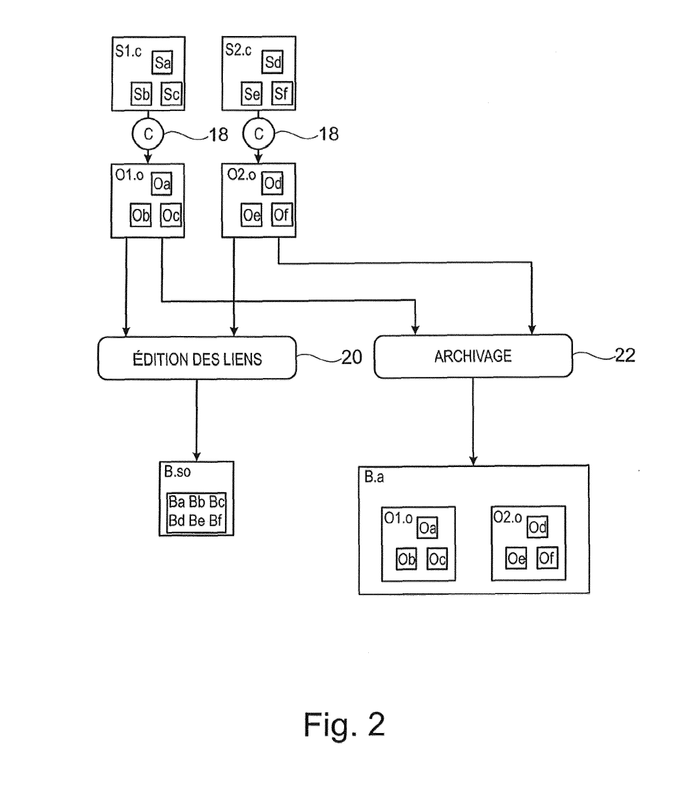

De ce fait, l'étape de compilation/édition des liens de chaque bibliothèque est modifiée de la manière illustrée Figure 2.

Après compilation (étape 18) des différents fichiers source ".c" en fichiers objet ".o", comme précédemment l'éditeur de liens crée (étape 20) une bibliothèque partagée B.so, indivisible.

Mais parallèlement, il crée aussi (étape 22) un fichier d'archive B.a regroupant l'ensemble des fichiers objet O1.o, O2.o ... résultant de la compilation des fichiers source, ces fichiers objet étant des fichiers intermédiaires segmentés.

En d'autres termes, les différentes fonctions Oa, Ob, Oc ... du fichier objet initial O1.o ou Od, Oe, Of ... du fichier objet initial O2.o, etc., seront accessibles isolément, à la différence du fichier de bibliothèque partagée B.so où les différentes fonctions correspondantes Ba, Bb, Bc, Bd, Be, Bf ..., sont incorporées sous forme d'un bloc indivisible de code binaire. On notera que la création de ce type de fichier segmenté n'est pas une option par défaut de la compilation/édition des liens, et qu'il est donc nécessaire de requérir spécifiquement cette opération lors de la compilation, en demandant au compilateur de créer une section par fonction, au lieu d'une section commune à toutes les fonctions comme dans le cas du fichier B.so.

En variante, on peut prévoir que l'archive B.a contienne non pas des fichiers objet O1.o, O2.o ..., mais des fichiers source correspondants S1.c, S2.c ..., qui feront l'objet ultérieurement d'une compilation. Bien que cette variante ne soit pas spécifiquement reprise dans la description qui va suivre, on comprendra que l'invention s'applique aussi bien à une mise en oeuvre où B.a est un fichier d'archive de fichiers objet que dans celui où B.a est un fichier archive de fichiers source.

Ces opérations de compilation/édition des liens et de création d'un fichier d'archive (étapes 20 et 22) sont exécutées pour chacune des bibliothèques partagées du système. On se trouvera donc en présence d'une pluralité de fichiers B.so et d'une pluralité correspondante de fichiers d'archive B.a.

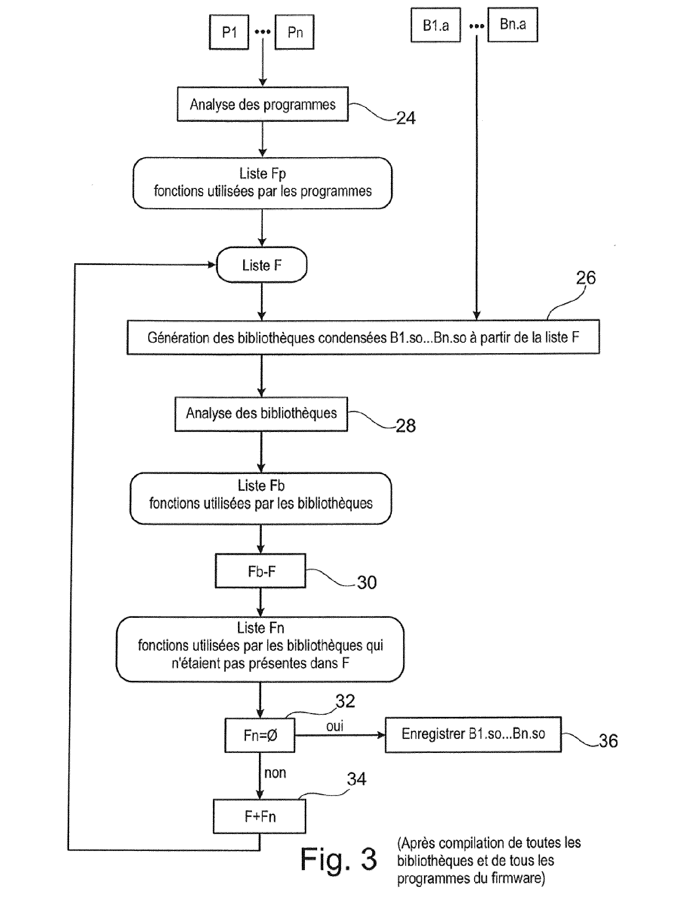

Les étapes suivantes sont illustrées Figure 3.

Après que les programmes exécutables ont été compilés de leur côté, les fichiers correspondants P1 ... Pn sont analysés (étape 24) afin d'établir une liste globale, F, recensant les Fp fonctions des bibliothèques partagées appelées au moins une fois par ces programmes.

À partir des fichiers d'archive segmentés B1.a ... Bn.a des bibliothèques, on re-crée (étape 26) de nouvelles versions des bibliothèques, qui seront des versions condensées B1.so ... Bn.so dont ont été retirées les fonctions qui ne sont utilisées par aucun exécutable (fonctions identifiées par l'analyse de l'étape 24). Les nouvelles bibliothèques B.so ne contiendront donc que des fonctions répertoriées dans la liste F (à ce stade, F=Fp).

On notera que cette opération est rendue possible par le fait que les fichiers d'archive segmentés B1.a ... Bn.a contiennent des fichiers objet distincts O1.o, O2.o ... que l'éditeur de liens sait analyser pour ne garder que ce qui est utile, à la différence des fichiers B1.so ... Bn.so des bibliothèques partagées, qui sont indivisibles.

L'étape suivante consiste à examiner (étape 28) les bibliothèques partagées pour déterminer si ces bibliothèques sont susceptibles de faire appel à des fonctions qui sont mémorisées à l'extérieur : en effet, non seulement les programmes peuvent utiliser des fonctions stockées dans des bibliothèques partagées, mais cela est également le cas des bibliothèques elles-mêmes, qui peuvent faire appel à des fonctions qu'elles ne stockent pas en interne, mais qui se trouvent dans une ou plusieurs autres bibliothèques partagées.

Une liste temporaire, Fb, est alors établie qui recense toutes les fonctions susceptibles d'être appelées par les bibliothèques. Les fonctions de la liste globale F courante (fonctions qui se retrouvent donc dans la version actuelle des bibliothèques générées à l'étape 26) sont supprimées de la liste temporaire Fb (étape 30). Le contenu Fn de la liste temporaire résultante recense donc toutes les fonctions susceptibles d'être appelées par les bibliothèques, mais qui ne se retrouvent pas dans les bibliothèques générées à l'étape 26.

Si cette liste Fn n'est pas vide (test de l'étape 32), il est nécessaire de générer une nouvelle version des bibliothèques, incorporant les fonctions de cette liste Fn. Ceci est réalisé en itérant l'étape 26, après avoir inclus dans la liste temporaire courante (étape 34) les F fonctions précédemment identifiées à l'étape 24, qui devront continuer à apparaitre dans les bibliothèques.

Le processus ci-dessus est itéré, jusqu'à ce que la liste temporaire Fn soit vide (test 32).

Concrètement, la liste globale F finit par contenir la totalité des fonctions qui doivent se trouver dans le *firmware.* Les bibliothèques successivement générées sont de plus en plus volumineuses, car les premières versions ne contiennent que les fonctions requises par les programmes exécutables, puis au fur et à mesure des itérations les fonctions requises par les autres bibliothèques y sont progressivement ajoutées.

Lorsque la liste temporaire Fn est vide, on est alors certain que les fonctions susceptibles d'être appelées (i) par un quelconque des programmes exécutables et (ii) par une quelconque des bibliothèques partagées seront bien présentes dans l'une des bibliothèques partagées B1.so ... Bn.so. L'ensemble formé par ces bibliothèques partagées, où les fonctions nécessaires apparaissent une fois et une seule, peut être considéré comme un ensemble optimal du point de vue de la taille occupée. Cet ensemble de bibliothèques partagées est sauvegardé (étape 36) et mémorisé, en même temps que les programmes exécutables, dans le *firmware* de l'équipement, constituant ainsi la forme définitive, optimisée, du fichier binaire exécutable du système d'exploitation.

## Revendications

1. Un procédé de construction d'une bibliothèque logicielle partagée comprenant une pluralité de fonctions utilitaires ou données partagées, cette bibliothèque étant destinée à être utilisée par une pluralité prédéfinie de programmes exécutables,
ce procédé comprenant des étapes successives de :
e) analyse (24) des programmes exécutables, de manière à établir une liste, parmi une pluralité de N desdites fonctions/données, de F fonctions/données susceptibles d'être appelées par au moins l'un de ces programmes exécutables ;
f) création (26) d'une version réduite de la bibliothèque partagée, à partir d'un fichier d'archive et de la liste des F fonctions/données, et mémorisation comme bibliothèque partagée de la version réduite ainsi obtenue,
et étant **caractérisé en ce qu'il** comprend, préalablement aux étapes e) et f) précitées, les étapes successives suivantes :
a) compilation (18) de fichiers source (S1.c, S2.c ...) contenant ensemble les N fonctions/données, de manière à produire des fichiers objet intermédiaires respectifs (O1.o, O2.o ...), ces fichiers objet étant des fichiers segmentés isolant chaque fonction/donnée dans une section différente (Oa, Ob, Oc, Od ...) ;
b) édition des liens (20) des fichiers objet, de manière à créer une première version de la bibliothèque partagée (B.so) regroupant dans un même fichier binaire les N fonctions/données ;
c) création (22) dudit fichier d'archive (B.a) regroupant dans un même fichier binaire les fichiers objet intermédiaires ;
d) compilation (10) et édition des liens (12) des programmes exécutables faisant référence à la bibliothèque partagée (B.so).

2. Le procédé de la revendication 1, dans lequel les fichiers intermédiaires sont stockés dans le fichier d'archive sous forme de fichiers source, et le procédé comprend en outre une étape ultérieure de compilation de ces fichiers source en fichiers objet.

3. Un procédé selon l'une des revendications 1 ou 2, pour l'optimisation globale d'un ensemble formé d'une pluralité desdites bibliothèques logicielles partagées destinées à être utilisées par une pluralité prédéfinie desdits programmes exécutables,
chaque bibliothèque partagée de l'ensemble comprenant une pluralité des fonctions utilitaires ou données partagées susceptibles d'être appelées par au moins l'un des programmes exécutables ou l'une des autres bibliothèques partagées,
procédé **caractérisé par** les étapes successives suivantes :
i) pour chacune des bibliothèques dudit ensemble de bibliothèques, exécution des étapes a), b) et c) de compilation (18), édition des liens (20) et création (22) d'un fichier d'archive (B1.a...Bn.a) respectif ;
ii) pour chacun desdits programmes exécutables, exécution de l'étape d) de compilation (10) des fichiers source du programme et d'édition des liens (12) pour donner un programme exécutable (P1, P2...) respectif ;
iii) analyse des programmes exécutables obtenus à l'étape ii), de manière à établir une liste globale (F) recensant, parmi l'ensemble des N fonctions/données, les fonctions/données susceptibles d'être appelées par au moins l'un de ces programmes exécutables ;
iv) création (26) d'une version réduite des bibliothèques partagées (B1.so ... Bn.so) à partir des fichiers d'archive (B1.a...Bn.a) et des fonctions/données susceptibles d'être appelées par ces bibliothèques et présentes dans la liste globale (F) ;
v) création (28) d'une liste temporaire (Fb) recensant les fonctions susceptibles d'être appelées par les bibliothèques partagées créées à l'étape iv) ;
vi) suppression (30), dans la liste temporaire (Fb), des fonctions/données utilisées à l'étape iv) ;
vii) tant que la liste temporaire n'est pas vide : inclusion (34) dans la liste temporaire courante des fonctions identifiées à l'étape iii), et réitération de l'étape iv), sur la base des fonctions/données présentes dans la liste temporaire (Fb), ainsi que des étapes v) et vi) ; et
viii) lorsque la liste temporaire est vide (32) : mémorisation (36) comme bibliothèques partagées des versions réduites respectives des bibliothèques obtenues à l'étape iv).
